# EUROPÄISCHE PATENTSCHRIFT

(11) **EP 0 672 443 B1**
(45) Veröffentlichungstag und Bekanntmachung des Hinweises auf die Patenterteilung: **03.11.1999**
(21) Anmeldenummer: 95103641.7
(22) Anmeldetag: 14.03.1995
(51) Int. Cl.: B01D 29/00, B01D 35/02, B29C 47/68, B29C 45/24

(54) **Steuer- und Filtriereinrichtung für mindestens zwei Fluidteilströme**
Control and filtering device for at least two partial fluid streams
Dispositif de contrôle et de filtration d' au moins deux courants partiels de fluide

(30) Priorität: 15.03.1994 DE 4408803; 15.03.1994 DE 4408600
(43) Veröffentlichungstag der Anmeldung: 20.09.1995
(73) Patentinhaber: WIL-MAN POLYMER-FILTRATION GmbH, 48493 Wettringen (DE)
(72) Erfinder: Schwanekamp, Heinrich, D-48691 Vreden (DE); Wilken-Trenkamp, Ludger, D-48329 Havixbeck (DE); Hangmann, Manfred, D-48268 Greven (DE); Leuders, Wilfried, D-48599 Gronau (DE)
(74) Vertreter: Lau-Loskill, Philipp, Dipl.-Phys.

(56) Entgegenhaltungen:
- EP-A- 0 250 695
- DE-A- 3 905 963
- DE-C- 3 527 173
- DE-C- 4 012 404
- DE-C- 4 218 756

## Beschreibung

Die vorliegende Erfindung betrifft eine Steuer- und Filtriereinrichtung für mindestens zwei Fluidteilströme, in der Folge auch mit "Steuereinrichtung" bezeichnet.

In der Technik tritt häufig das Problem auf, daß Fluidströme filtriert werden müssen. Um dieses Problem zu lösen, ist es beispielsweise bekannt, eine entsprechende Filtereinrichtung in einem Fluidkanal anzuordnen, wobei dann das Fluid diese Filtereinrichtung derart passiert, daß hieraus die in dem Fluid enthaltenen unerwünschten Partikel abfiltriert werden. Darüber hinaus gibt es entsprechende Filtereinrichtungen, bei denen der Hauptfluidstrom, ausgehend von einem gemeinsamen Fluidzufuhrkanal, auf mehrere Fluidteilkanäle aufgeteilt wird. In Strömungsrichtung des Fluids gesehen stromab der Fluidteilkanäle werden dann die Fluidteilströme wieder in einem gemeinsamen Fluidabfuhrkanal zusammengefaßt. In den Fluidteilkanälen der beispielsweise aus der EP-A 0 250 695 bekannten Filtereinrichtungen sind dann Filter angeordnet, wobei jedes Filter wahlweise von beiden Fluidteilströmen gleichzeitig durchströmt oder nur ein Filter von dem entsprechenden Fluidteilstrom durchströmt wird, während das jeweils andere Filter in dieser Produktionsstellung mit dem Fluid rückgespült und somit regeneriert wird. Desweiteren sind die Filter bei der bekannten Filtereinrichtung in entsprechenden Filterträgerkörper angeordnet, wobei jeder Filterträgerkörper bei der aus der EP-A 0 250 695 bekannten Filtereinrichtung als Filterbolzen ausgebildet und axial verschiebbar in einem Gehäuse der Filtereinrichtung gelagert ist, derart, daß die Filter aus ihrer Filtrierstellung durch eine Verschiebung des Trägerkörpers in eine Spül- bzw. Regenerierstellung überführt werden können. In dieser Spül- bzw. Regenerierstellung ist dann das entsprechende Filter mit einem zur Atmosphäre hin offenen Spülkanal verbunden, so daß die vom Filter abfiltrierten Partikel bei der Regenerierung des Filters nach außen hin abgeführt werden.

Die bekannte, zuvor beschriebene Filtereinrichtung weist einen relativ komplexen Aufbau auf. Dies hängt damit zusammen, daß eine Vielzahl von Teilkanälen miteinander fluchten müssen, da ansonsten die Gefahr besteht, daß sich Strömungstotgebiete ausbilden, die letztendlich zum Verstopfen der bekannten Filtereinrichtung führen können.

Desweiteren ist aus der DE-A 42 18 756 eine Steuereinrichtung bekannt, die einen gemeinsamen Fluidzufuhrkanal sowie einen gemeinsamen Fluidabfuhrkanal aufweist, wobei diese beiden Kanäle jeweils über zwei Fluidteilkanäle miteinander verbunden sind. Bei der bekannten Steuereinrichtung ist jeweils eine in jedem Fluidteilkanal vorgesehene Filtereinrichtung sowie eine, dem Fluidzufuhrkanal und den Teilkanälen zugeordnete und mit einem Sperrmittel versehene Ventileinrichtung vorhanden, wobei das diesbezügliche Sperrmittel bei der bekannten Steuereinrichtung zwischen einer ersten Stellung und einer zweiten Stellung axial verschiebbar ist. Bei der zweiten Stellung des Sperrmittels erfolgt bei der bekannten Steuereinrichtung ein Rückspülen bzw. Regenerieren der diesem Sperrmittel zugeordneten Filtereinrichtung derart, daß das Fluid entgegengesetzt zur Filtrierrichtung die Filtereinrichtung durchströmt und hierdurch entsprechend abgeschiedene Partikel ablöst, so daß stromauf der so durchströmten Filtereinrichtung das dann mit Schmutzpartikeln beladene Fluid über die zweite Stellung des Sperrmittels zur Atmosphäre hin abgeführt werden kann.

Die aus der DE-A 42 18 756 bekannte Steuereinrichtung weist jedoch den Nachteil auf, daß es hierbei sehr leicht zu einer Verschmutzung der Filter dann kommen kann, wenn sich beispielsweise bei einem Wechsel des zu filtrierenden Fluids Reste und Rückstände des ursprünglichen Fluids oder bei einer Produktionsunterbrechung erhärtete Kunststoffpartikel stromauf und/oder stromab des Sperrmittels angesammelt haben. Diese festen, überwiegend partikelförmigen Rückstände reichern sich bei der bekannten Steuereinrichtung mit Beginn der neuen Produktion nahezu augenblicklich auf den entsprechenden Filterflächen an, so daß bereits nach kurzer Aufnahme der neuen Produktion ein Rückspülen dieser dann beladenen Filter erforderlich wird.

Der vorliegenden Erfindung liegt die Aufgabe zugrunde, eine Steuereinrichtung der genannten Art zur Verfügung zu stellen, die eine besonders störungsfreie Betriebsweise ermöglicht.

Diese Aufgabe wird erfindungsgemäß durch eine Steuereinrichtung mit den Merkmalen des Patentanspruchs 1 gelöst.

Die erfindungsgemäße Steuereinrichtung für mindestens zwei Fluidteilströme weist einen gemeinsamen Fluidzufuhrkanal und einen gemeinsamen Fluidabfuhrkanal auf, wobei der Fluidzufuhrkanal mit dem Fluidabfuhrkanal über mindestens zwei Fluidteilkanäle verbunden ist. Jedem Fluidteilkanal ist eine Filtereinrichtung zugeordnet, wobei ein oder mehrere Filter der Filtereinrichtung mit dem durch den jeweiligen Fluidteilkanal strömenden Fluid in Kontakt ist bzw. sind, um so aus diesem, in dem Fluidteilkanal strömenden Fluid die unerwünschten Partikel abzufiltrieren. Desweiteren weist die erfindungsgemäße Steuereinrichtung mindestens eine, mit mindestens einem Sperrmittel versehene Ventileinrichtung auf, wobei das Sperrmittel der Ventileinrichtung mindestens einem der Kanäle (Fluidzufuhrkanal, Fluidabfuhrkanal, Fluidteilkanal) derart zugeordnet ist, daß das Sperrmittel zwischen einer ersten Stellung, in der das in den Kanälen strömende Fluid filtriert wird, und einer zweiten Stellung, in der das Fluid in dem mindestens einen Teilkanal filtriert wird, während gleichzeitig die in dem mindestens anderen Teilkanal angeordnete Filtereinrichtung bzw. das hierzu gehörende Filter bzw. die hierzu gehörigen Filter freigespült wird bzw. werden, bewegbar ist. Um eine dieser beiden Stellungen (erste bzw. zweite Stellung) bei der erfindungsgemäßen Steuereinrichtung herbeizuführen, ist das jeweilige Sperrmittel drehbar und/oder verschiebbar gelagert, derart, daß es aus der ersten in die zweite Stellung oder aus der zweiten in die erste Stellung durch eine entsprechende Drehung und/oder Verschieben überführbar ist.

Desweiteren ist bei der erfindungsgemäßen Steuereinrichtung jedem Fluidteilkanal oder jeder Filtereinrichtung ein Absperrventil zugeordnet, das in seiner Sperrstellung eine Öffnung zur Atmosphäre hin verschließt. Hingegen ermöglicht dieses zusätzliche Absperrventil in seiner geöffneten Stellung, daß ein mit Partikeln verunreinigter Fluidstrom aus der Steuereinrichtung zur Atmosphäre hin abführbar ist, so daß dementsprechend dieser mit Schmutzpartikeln beladene Fluidteilstrom nicht in Kontakt mit dem jeweiligen Filter der diesbezüglichen Filtereinrichtung gelangt.

Ein wesentlicher Vorteil der erfindungsgemäßen Steuereinrichtung ist darin zu sehen, daß sie ein Durchströmen der in den mindestens zwei Fluidteilkanälen angeordneten Filter der entsprechenden Filtereinrichtungen und somit ein Abscheiden der unerwünschten Partikel aus dem Fluid, oder ein Entfernen der abgeschiedenen Partikel von mindestens einem Filter, ein Entfernen von Verschunkungen aus der Steuereinrichtung Strom auf der Filter oder gleichzeitig ein Filtrieren und damit ein Reinigen mindestens eines Fluidstroms von unerwünschten Partikeln ermöglicht, während zeitgleich damit das andere Filter bzw. die anderen Filter durch das Fluid freigespült wird bzw. werden.

Die erfindungsgemäße Steuereinrichtung weist eine Reihe von weiteren Vorteilen auf. So ist zunächst festzuhalten, daß die erfindungsgemäße Steuereinrichtung im Vergleich zu der aus der EP-A 0 250 695 bekannten Filtereinrichtung eine besonders einfache Bauweise besitzt, da hier lediglich wenige Kanäle erforderlich sind, um die zuvor aufgeführten drei Betriebsweisen zu ermöglichen. Dies hängt damit zusammen, daß im Gegensatz zum eingangs aufgeführten Stand der Technik bei der erfindungsgemäßen Steuereinrichtung bewußt die mindestens eine Ventileinrichtung getrennt von der Filtereinrichtung angeordnet ist. Durch eine derartige getrennte Anordnung von Filtereinrichtung und der mindestens einen Ventileinrichtung ist es desweiteren möglich, eine besonders störungsfreie Betriebsweise der erfindungsgemäßen Steuereinrichtung zu erreichen. Ein weiterer Vorteil der erfindungsgemäßen Steuereinrichtung ist darin zu sehen, daß bei einem Verschleiß der Ventileinrichtung nur diese und nicht gleichzeitig die Filtereinrichtung insgesamt, d.h. somit auch noch der Filterträgerkörper, ausgetauscht werden muß, so daß die entsprechende Reparatur relativ kostengünstig und mit geringerem Aufwand durchgeführt werden kann. Als wesentlicher Vorteil der erfindungsgemäßen Steuereinrichtung ist anzusehen, daß es diese Steuereinrichtung erlaubt, bei einem Wechsel der Farbe oder des Materials des zu filtrierenden Fluids, insbesondere bei Anwendung der Steuereinrichtung bei Extrudern für thermoplastischen Kunststoff, ein leichtes und unproblematisches Spülen der Steuereinrichtung herbeizuführen. Dies führt nicht nur zu einer Einsparung an Produktionszeit sondern auch insbesondere zur Verringerung von Fehlproduktionen bzw. Fehlfarben. Ferner verzichtet die erfindungsgemäße Steuereinrichtung so weit wie möglich auf entsprechend kleindimensionierte Kanäle, so daß hierbei ein Zusetzen dieser engen Kanäle vermieden wird, was insbesondere dann besonders wichtig ist, wenn die erfindungsgemäße Steuereinrichtung für das Filtrieren von relativ instabilen und leicht zum Vercracken neigenden Kunststoffen eingesetzt wird.

Um die zuvor bei der erfindungsgemäßen Steuereinrichtung angesprochenen Betriebsweisen zu ermöglichen, sieht eine erste, besonders einfach ausgestaltete Ausführungsform der erfindungsgemäßen Steuereinrichtung vor, daß diese Ausführungsform eine einzige Ventileinrichtung aufweist. Bezüglich der Anordnung dieser einzigen Ventileinrichtung bestehen mehrere Möglichkeiten, wie diese nachfolgend beschrieben sind.

So sieht die erste Möglichkeit vor, daß die einzige Ventileinrichtung nur ein einziges Sperrmittel aufweist, wobei das einzige Sperrmittel dem Fluidzufuhrkanal im Bereich der Abzweigung der Fluidteilkanäle zugeordnet ist. Hierbei ist dieses Sperrmittel dann so ausgebildet, daß es wahlweise zwischen der ersten Stellung, in der das durch die Fluidteilkanäle strömende Fluid filtriert wird, und der zweiten Stellung, in der mindestens in einem Teilkanal das Fluid weiter filtriert wird, während das in dem anderen Teilkanal bzw. den anderen Teilkanälen angeordnete Filter bzw. die angeordneten Filter durch das Fluid freigespült wird, vorzugsweise drehbar und/oder verschiebbar ist. In der zweiten Stellung ist dann vorzugsweise die Fluidzufuhr zu dem anderen Teilkanal bzw. den anderen Teilkanälen abgesperrt, so daß insbesondere ein Rückspülen des Filters bzw. der Filter stattfindet.

Die zweite Möglichkeit der erfindungsgemäßen Steuereinrichtung, die ebenfalls nur eine einzige Ventileinrichtung und ein einziges Sperrmittel aufweist, sieht vor, daß das einzige Sperrmittel allen Fluidteilkanäle zugeordnet ist. Hierbei wird durch eine Drehung und/oder ein Verschieben des Sperrmittels wahlweise die erste oder zweite Stellung eingestellt.

Bei einer anderen Ausführungsform der erfindungsgemäßen Steuereinrichtung weist die erfindungsgemäße Steuereinrichtung eine der Anzahl der Fluidteilkanäle entsprechende Anzahl von Ventileinrichtungen auf, wobei jede Ventileinrichtung jeweils mit einem Sperrmittel, das im Fluidstrom des jeweiligen Fluidteilkanals angeordnet ist, versehen ist. Hierbei ist bei dieser anderen Ausführungsform der erfindungsgemäßen Steuereinrichtung somit jedes in einem jeden Fluidteilkanal angeordnetes Sperrmittel individuell durch Drehung und/oder durch Verschieben von der ersten Stellung in die zweite Stellung und umgekehrt hierzu überführbar, wobei sich bei dieser Ausführungsform der erfindungsgemäßen Steuereinrichtung natürlich nicht gleichzeitig alle Ventileinrichtungen in derselben Stellung des Sperrmittels befinden dürfen.

Grundsätzlich ist bei der erfindungsgemäßen Steuereinrichtung bezüglich der Anzahl der Teilkanäle festzuhalten, daß hierbei mindestens zwei Teilkanäle vorhanden sein müssen, um die zuvor bereits mehrfach wiederholten Betriebsweisen (erste Stellung, zweite Stellung) sicherzustellen. Besonders geeignet ist es, wenn die erfindungsgemäße Steuereinrichtung zwei bis acht Fluidteilkanäle, vorzugsweise zwei bis vier Fluidteilkanäle, aufweist.

Eine weitere Ausführungsform der erfindungsgemäßen Steuereinrichtung besitzt zwei Fluidteilkanäle und zwei, den Fluidteilkanälen zugeordnete Ventileinrichtungen, wobei jedes Sperrmittel einer jeden Ventileinrichtung einem Fluidteilkanal zugeordnet und drehbar und/oder verschiebbar gelagert ist, derart, daß es aus der ersten Stellung in die zweite Stellung und umgekehrt hierzu bringbar ist.

Vorstehend ist im Zusammenhang nur allgemein bei der Ventileinrichtung oder den Ventileinrichtungen und von dem Sperrmittel bzw. den Sperrmitteln gesprochen worden. Bezüglich der konkreten Ausgestaltung des Sperrmittels bei der erfindungsgemäßen Steuereinrichtung bestehen wiederum verschiedene Möglichkeiten. Grundsätzlich ist hierzu festzuhalten, daß das Sperrmittel drehbar bzw. verschiebbar gelagert sein muß und in eine erste Stellung und in eine zweite Stellung bringbar sein muß.

Eine bevorzugte Ausführungsform der erfindungsgemäßen Steuereinrichtung sieht vor, daß hierbei das Sperrmittel einer jeden Ventileinrichtung als zylindrischer Bolzen ausgebildet ist, wobei der zylindrische Bolzen fluiddicht in einer entsprechenden Gehäusebohrung angeordnet ist. Bezüglich der Ausrichtung dieses Bolzens ist festzuhalten, daß der Bolzen in Fluidströmungsrichtung gesehen bei dieser Ausführungsform im Wesentlichen senkrecht ausgerichtet ist, was bedeutet, daß die Fluidströmungsrichtung und die Längsachse des zylindrischen Bolzens unter einem Winkel von etwa 90° ausgerichtet sind. Desweiteren ist der drehbar in der Gehäusebohrung angeordnete Bolzen mit einer Durchtrittsöffnung versehen, wobei diese Durchtrittsöffnung dann bei einer Anordnung des zylindrischen Bolzens im Fluidzufuhrkanal auf den Fluidzufuhrkanal ausrichtbar ist und mit diesem auch dann fluchtet, während bei einer Anordnung des zylindrischen Bolzen im Fluidteilkanal die Durchtrittsöffnung auf den Fluidteilkanal ausrichtbar ist und mit dem jeweiligen Fluidteilkanal dann auch fluchtet, so daß in der ersten Stellung des zylindrischen Bolzens dann der Fluidstrom die Durchtrittsöffnung ungehindert passieren kann, während in der zweiten Stellung des Bolzens diese Durchtrittsöffnung nach Verdrehen des Bolzen verschlossen ist.

Insbesondere dann, wenn die erfindungsgemäße Steuereinrichtung eine solche Ausgestaltung aufweist, bei der jedem Fluidteilkanal das zuvor beschriebene und als zylindrischer Bolzen ausgebildete Sperrmittel enthält, erlaubt diese Ausgestaltung eine individuelle Anpassung der Strömungsverhältnisse und Rückspülzyklen an die jeweiligen Erfordernisse.

Bei einer weiteren Ausführungsform der erfindungsgemäßen Steuereinrichtung ist das Sperrmittel einer jeden Ventileinrichtung nicht, wie vorstehend beschrieben, als zylinderförmiger Bolzen, sondern vielmehr als scheibenförmiges Sperrmittel ausgebildet. Hierbei ist dieses scheibenförmige Sperrmittel dann, wenn es im Fluidzufuhrkanal angeordnet ist, derart zur Strömungsrichtung des Fluids im Fluidzufuhrkanal, oder wenn es in den Fluidteilkanälen angeordnet, derart zur Strömungsrichtung des Fluids in den Fluidteilkanälen ausgerichtet, daß die Stirnflächen des scheibenförmigen Sperrmittels im Wesentlichen senkrecht zur Strömungsrichtung des Fluids positioniert ist. Dies bedeutet, daß die Stirnflächen des scheibenförmigen Sperrmittels im Wesentlichen unter einem Winkel von 90° zur Strömungsrichtung des Fluids im Fluidzufuhrkanal bzw. in den Fluidteilkanälen ausgerichtet ist. Desweiteren ist das scheibenförmige Sperrmittel mit mindestens einer ersten Durchtrittsöffnung versehen, wobei sich diese Durchtrittsöffnung von der einen Stirnfläche zur anderen Stirnfläche des scheibenförmigen Sperrmittels erstreckt. Diese erste Durchtrittsöffnung, die vorzugsweise als Durchtrittsbohrung ausgebildet ist, ist dann, wenn das scheibenförmige Sperrmittel im Fluidzufuhrkanal angeordnet ist, auf den Fluidzufuhrkanal und dann, wenn das scheibenförmige Sperrmittel in den Fluidteilkanälen angeordnet ist, auf die Fluidteilkanäle derart ausrichtbar, daß durch Drehung des scheibenförmigen Sperrmittels die erste Durchtrittsöffnung mit dem Fluidzufuhrkanal bzw. dem Fluidteilkanälen fluchtet, wodurch die erste Stellung des scheibenförmigen Sperrmittels herbeigeführt wird. Ein erneutes Drehen bewirkt dann, daß sich die erste Durchtrittsöffnung nicht mehr in Flucht mit dem Fluidzufuhrkanal bzw. den Fluidteilkanälen befindet, wodurch ein Fluidstrom in diesen Kanälen unterbrochen wird, so daß sich dann das scheibenförmige Sperrmittel in seiner zweiten Stellung befindet.

Vorstehend wurde im Zusammenhang mit dem Sperrmittel ein scheibenförmiges Sperrmittel beschrieben, wobei es nicht erforderlich ist, daß es sich hierbei unbedingt um ein solches Sperrmittel handeln muß, dessen Stirnflächen als vollständige Kreise ausgebildet sind. Hier ist es sehr wohl möglich, teilscheibenförmige Sperrmittel vorzusehen, deren Stirnflächen dann die Form eines Halbkreises oder eines Kreissegmentes aufweisen.

Bezüglich der Ausgestaltung der in der erfindungsgemäßen Steuereinrichtung vorgesehenen Filtereinrichtung ist festzuhalten, daß grundsätzlich diese Filtereinrichtung beliebig ausgestaltet sein kann, sofern sichergestellt ist, daß der zu filtrierende Fluidteilstrom auch tatsächlich gleichmäßig das mindestens eine in der Filtereinrichtung angeordnete Filter durchströmt. Insbesondere dann, wenn die erfindungsgemäße Steuereinrichtung zum Reinigen von thermoplastischen Kunststoffmassen eingesetzt wird, bietet es sich an, daß die Filtereinrichtung mindestens ein in einem Bolzen angeordnetes Filter umfaßt, wobei vorzugsweise dieser Bolzen dann axial verschiebbar innerhalb einer entsprechenden Gehäusebohrung der Steuereinrichtung angeordnet ist, derart, daß zum Wechseln des Filters ein axiales Verschieben des Bolzens dann lediglich zu erfolgen hat. Eine derartige Filteranordnung ist grundsätzlich bekannt und in mannigfacher Ausgestaltung im Produktionseinsatz.

Um bei einer derartigen Ausführungsform der erfindungsgemäßen Steuereinrichtung das eingangs beschriebene Absperrventil vorzusehen, bietet es sich an, dieses Absperrventil dem Raum zuzuordnen, der stromauf des Filters vorgesehen ist. Hierdurch wird es möglich, daß beim Rückspülen des Filters das dann mit Partikeln beladene Fluid direkt in der unmittelbaren Nähe des Filters zur Atmosphäre hin abgeführt werden kann, wenn sich das Absperrventil in seiner geöffneten Stellung befindet. Eine derartige Anordnung des Absperrventil weist desweiteren den Vorteil auf, daß der Raum stromauf des Filters in der Rückspülstellung einwandfrei von Fremdpartikeln befreit werden kann, so daß innerhalb kürzester Zeit ein entsprechend regeneriertes Filter wieder für die Filtrierung des Fluidteilstroms zur Verfügung steht.

Insbesondere ist bei dieser zuvor beschriebenen Ausführungsform das Absperrventil an der Einmündung eines den Raum mit der Atmosphäre hin verbindenden Abflußkanals angeordnet und vorzugsweise als Tellerventil ausgestaltet.

Vorstehend ist in Verbindung mit der erfindungsgemäßen Steuereinrichtung eine Vielzahl von Ausführungsformen beschrieben, bei denen überwiegend die Regenerierung der mit Partikeln beladenen Filterflächen dadurch erfolgt, daß in der zweiten Stellung des Sperrmittels der Ventileinrichtung mindestens ein Fluidteilstrom filtriert wird, während mindestens ein anderer Fluidteilstrom umgelenkt ist und die zum zu regenerierenden Filter gehörenden Kanäle und somit das Filter entgegengesetzt zur üblichen Strömungsrichtung durchströmt und dadurch die auf der Oberfläche des Filters abgeschiedenen Partikel abspült. Eine derartige Betriebsweise wird in der vorliegenden Beschreibung als Rückspülen bezeichnet. Die nachfolgenden Ausführungsformen der erfindungsgemäßen Steuereinrichtung weisen jedoch eine derartige Konstruktion auf, daß hierbei nicht die Strömungsrichtung des zur Regenerierung des Filters verwendete Fluidteilstromes in seiner Richtung umgelenkt wird, so daß diese Art der Regenerierung nachfolgend auch kurz als Spülung des Filters bezeichnet wird.

Um die zuvor angesprochene Spülung des Filters zu ermöglichen, sieht eine weitere Ausführungsform der erfindungsgemäßen Steuereinrichtung vor, daß das bereits vorstehend beschriebene Absperrventil, das in seiner geöffneten Stellung ein Abführen eines Fluidteilstroms zur Atmosphäre hin ermöglicht, stromab des Filters angeordnet ist. Bei dieser Ausführungsform ist dann das in dem zu filtrierenden Fluidstrom vorgesehene Filter derart gelagert, daß die mit Schmutz bzw. Partikel beladene Filterfläche durch eine Veränderung der Position des Filters durch das Fluid freispülbar ist, wobei das nach dem Freispülen der Filterfläche mit Partikeln beladene Fluid dann über das geöffnete Absperrventil zur Atmosphäre hin abführbar ist. Mit anderen Worten verzichtet somit diese Ausführungsform der erfindungsgemäßen Steuereinrichtung darauf, in der Regenerierstellung die Strömungsrichtung eines Fluidteilstromes zu verändern und verändert stattdessen die Position des Filters, das dann entsprechend durch den zugehörigen Fluidteilstrom freigespült wird.

Um bei dieser Ausführungsform die zuvor angesprochene Veränderung der Position des Filters herbeizuführen, bietet es sich an, das Filter in dem bereits zuvor beschriebenen Bolzen drehbar zu lagern.

Eine Weiterbildung der zuvor beschriebenen Ausführungsform der erfindungsgemäßen Steuereinrichtung, bei der ein in seiner Position veränderbares Filter vorgesehen ist, sieht vor, daß das Absperrventil dann desweiteren derart dem Filter zugeordnet ist, daß es den stromab des Filters angeordneten Raum oder den Abschnitt des jeweiligen Fluidteilkanals zusätzlich noch absperrt, so daß dann bei der Freispülung des Filters der mit Partikeln verunreinigte Fluidteilstrom vollständig zur Atmosphäre hin abgeführt wird. Diese Ausführungsform der erfindungsgemäßen Steuereinrichtung gelangt insbesondere immer dann zur Anwendung, wenn sich die vom Filter abgespülten Partikel nicht aufgrund der Schwerkraft im Bodenbereich des Raumes bzw. des Fluidteilkanalabschnittes ansammeln und so bodenseitig durch das geöffnete Absperrventil vollständig abgeführt werden können.

Um bei der erfindungsgemäßen Steuereinrichtung die Ausbildung von Strömungstotgebieten zu verhindern, sieht eine besonders vorteilhafte Weiterbildung der erfindungsgemäßen Steuereinrichtung vor, daß im Verbindungsbereich des Fluidzufuhrkanals mit den Fluidteilkanälen eine die Turbulenz des Fluids erhöhende Einrichtung vorgesehen ist. Hierdurch wird in besonders geeigneter Weise desweiteren sichergestellt, daß alle Fluidteilkanäle, die im Verbindungsbereich des Fluidzufuhrkanals abzweigen, stets mit der gleichen Fluidmenge versorgt werden. Abhängig von dem jeweiligen Fluid können derartige, die Turbulenz des Fluid erhöhende Einrichtungen beispielsweise als grobmaschiges Sieb oder als in den Verbindungsbereichen hineinragende Vorsprünge oder Umlenkbleche ausgebildet sein.

Wie bereits vorstehend mehrfach erwähnt ist, wird die erfindungsgemäße Steuereinrichtung insbesondere bei Schmelzepumpen und/oder Extrudern eingesetzt, die zur Extrusion von thermoplastischen Kunststoffen verwendet werden. Hierbei wird die Steuereinrichtung dann derart ausgebildet und mit geeigneten Halterungselementen versehen, daß die Steuereinrichtung in einer Position stromab der Förderschnecke des Kunststoffextruders und/oder der Schmelzepumpe und stromauf der Düse desselben angeordnet wird. Bedingt dadurch, daß bei einer derartigen Anordnung der Steuereinrichtung zwangsläufig vor der Düse ein erheblicher Fluiddruck aufgebaut wird, kann bei solchen Ausführungsformen der erfindungsgemäßen Steuereinrichtung, die bei der Regenerierung des Filters bzw. der Filter diese rückspülen, auf die Anordnung eine dem Fluidabfuhrkanal zugeordneten weiteren Ventileinrichtung verzichtet werden.

Wird jedoch die erfindungsgemäße Steuereinrichtung für andere Zwecke verwendet, so empfiehlt es sich, dem Fluidabfuhrkanal eine weitere Ventileinrichtung zuzuordnen, wobei diese weitere Ventileinrichtung mindestens eine erste Ventilstellung, in der die Fluidmenge durch den Fluidabfuhrkanal nicht begrenzt wird, und eine zweite Ventilstellung, in der die durch den Fluidabfuhrkanal zu fördernde Fluidmenge begrenzt wird, aufweisen muß.

Eine spezielle und besonders geeignete Ausführungsform der erfindungsgemäßen Steuereinrichtung, die zwei Fluidteilkanäle und zwei, den Fluidteilkanälen zugeordnete Ventileinrichtung aufweist, wobei jedes Sperrmittel einer jeden durch Drehung aus der ersten Stellung in die zweite Stellung und umgekehrt bringbar ist, sieht vor, daß jeder Fluidteilkanal einen ersten, stromab vom Fluidzufuhrkanal angeordneten Kanalabschnitt aufweist, wobei der erste Kanalabschnitt unter einem Winkel α von 120° bis 160° relativ zum Fluidzufuhrkanal angeordnet ist. Hieran schließt sich dann in Fluidströmungsrichtung gesehen jeweils ein zweiter Kanalabschnitt an, wobei die beiden zweiten Kanalabschnitte der beiden Fluidteilkanäle im Wesentlichen parallel verlaufen. Im Anschluß hieran erfolgt in Fluidströmungsrichtung gesehen jeweils ein dritter Kanalabschnitt, der unter einem Winkel β von 120° bis 140° vom zweiten Kanalabschnitt relativ zum gemeinsamen Fluidabfuhrkanal hin geneigt angeordnet ist. Eine derartige Anordnung und Ausgestaltung der Fluidteilkanäle stellt sicher, daß durch jeden Fluidteilkanal die selbe Fluidmenge transportiert wird, insbesondere dann, wenn die erfindungsgemäße Steuereinrichtung bei einem Extruder und/oder einer Schmelzepumpe für thermoplastische Kunststoffe eingesetzt wird.

In Weiterbildung der zuvor beschriebenen Ausführungsformen der erfindungsgemäßen Steuereinrichtung ist in jedem ersten Kanalabschnitt dann vorzugsweise eine im vorstehenden Sinne beschriebene Ventileinrichtung vorgesehen.

Um sicherzustellen, daß die jedem Fluidteilkanal zugeordnete Filtereinrichtung gut, auch insbesondere für Wartungsarbeiten, zugänglich ist, empfiehlt es sich, diese Filtereinrichtung in Weiterbildung der zuvor beschriebenen speziellen Ausführungsform in dem zweiten Kanalabschnitt zu positionieren.

Vorstehend sind in Verbindung mit der erfindungsgemäßen Steuereinrichtung überwiegend Ausführungsformen beschrieben worden, bei denen das Sperrmittel bzw. die Sperrmittel vorzugsweise drehbar gelagert ist bzw. sind.

Eine besondere geeignete Ausführungsform der erfindungsgemäßen Steuereinrichtung sieht vor, daß das Sperrmittel durch ein Verschieben, insbesondere ein axiales Verschieben, aus der ersten Stellung in die zweite Stellung und umgekehrt hierzu, überführbar ist.

Insbesondere dann, wenn die erfindungsgemäße Steuereinrichtung, wie bereits vorstehend wiederholt erwähnt, zwei Fluidteilkanäle sowie zwei Ventileinrichtungen aufweist, wobei jedem Fluidteilkanal das eine Sperrmittel der jeweiligen Ventileinrichtung zugeordnet ist, hat sich die zuvor angesprochene axiale Verschiebung des Sperrmittels als besonders geeignet erwiesen.

Bei einer besonders vorteilhaften Weiterbildung der erfindungsgemäßen Steuereinrichtung weist diese eine Ventileinrichtung auf, die eine in einem Gehäuse vorgesehene zylindrische Bohrung und ein hierin angeordnetes zylindrisches Sperrmittel umfaßt, wobei des zylindrische Sperrmittel axial verschiebbar in der zylindrischen Bohrung des Gehäuses derart gelagert ist, daß ein dichtender Eingriff zwischen dem zylindrischen Sperrmittel und der zylindrischen Bohrung der Ventileinrichtung besteht. Die zylindrische Gehäusebohrung ist mit zwei, radial gegenüberliegenden, zum Anschluß an entsprechende Teilkanalabschnitte geeigneten Bohrungen versehen. Das zylindrische Sperrmittel weist eine erste Bohrung auf, die als radial über den gesamten Durchmesser des Sperrmittels verlaufende Durchgangsbohrung ausgebildet ist, wobei diese erste Durchgangsbohrung sicherstellt, daß in der ersten Stellung der Ventileinrichtung ein Fluidstrom vom gemeinsamen Fluidzufuhrkanal zu dem entsprechenden Fluidteilkanal stattfindet. Desweiteren weist das zylindrische Sperrmittel eine mit axialem Abstand von der ersten Durchgangsbohrung angeordnete zweite Bohrung auf, wobei sich diese zweite Bohrung radial nur über einen Teildurchmesser des Sperrmittels erstreckt. Diese zweite Bohrung mündet in einen sich axial durch das Sperrmittel erstreckenden ersten Abflußkanal, wobei der erste Abflußkanal zur Atmosphäre hin offen ist. Hierbei stellt diese zweite Bohrung in Verbindung mit dem sich axial erstreckenden ersten Abflußkanal sicher, daß in der zweiten Stellung der Ventileinrichtung (Rückspülstellung) der mit den von dem jeweiligen Filter abgelösten Partikeln beladene Fluidstrom nach außen zur Atmosphäre hin abgeführt werden kann, so daß die gewünschte Reinigung des Filters erfolgt. Durch eine axiale Verschiebung des zylindrischen Sperrmittels relativ zu der zylindrischen Gehäusebohrung ist es dann möglich, daß das Sperrmittel von der ersten Stellung, in der die erste Durchgangsbohrung im Sperrmittel mit den beiden Bohrungen in der Gehäusewandung fluchtet und in der ein Fluidstrom durch den jeweiligen Fluidteilkanal in Richtung auf das entsprechende Filter stattfindet, in die zweite Stellung überführbar ist, wobei in der zweiten Stellung die zweite Bohrung im Sperrmittel mit nur einer der beiden Bohrungen der Gehäusebohrung fluchtet. Hierbei ist die eine der beiden Bohrungen des Gehäuses die Bohrung, die in Fluidströmungsrichtung gesehen stromab im Gehäuse angeordnet ist. Wie bereits vorstehend erläutert ist, erfolgt dann über die im Sperrmittel vorgesehene zweite Bohrung und den sich hieran anschließenden und ebenfalls im Sperrmittel angeordneten Abflußkanal die Abführung des bei der Reinigung des Filters mit Partikeln beladenen Fluidstromes zur Atmosphäre hin.

Bei einer Weiterbildung der zuvor beschriebenen Ausführungsform der Ventileinrichtung weist das Sperrmittel eine dritte, radial nur über einen Teildurchmesser des Sperrmittels verlaufende Bohrung auf. Hierbei mündet diese dritte Bohrung in einen sich axial durch das Sperrmittel erstreckenden zweiten Abflußkanal, oder in einen Fluidseitenkanal, wobei der zweite Abflußkanal bzw. der Fluidseitenkanal zur Atmosphäre hin offen ist. Die dritte Bohrung ist über das Sperrmittel gesehen vorzugsweise mit axialem Abstand von der ersten Durchgangsbohrung und der zweiten Bohrung sowie radial gegenüberliegend der zweiten Bohrung angeordnet, so daß lediglich eine axiale Verschiebung des Sperrmittels relativ zur Gehäusebohrung erforderlich ist, um die dritte Bohrung mit der Bohrung im Sperrmittel, die zum Fluidzufuhrkanal weist, zur Deckung zu bringen. Mit anderen Worten ist somit durch eine axiale Verschiebung des Sperrmittels relativ zur Gehäusebohrung die zuvor beschriebene dritte Stellung des Sperrmittels einstellbar. In dieser dritten Stellung des Sperrmittels kann dann das stromauf der Ventileinrichtung befindliche Fluid zur Atmosphäre hin abgeführt werden, so daß im Anfahrbetrieb ein Fluidablaß aus der erfindungsgemäßen Steuereinrichtung möglich ist.

Eine besonders geeignete Weiterbildung der zuvor beschriebenen Ausführungsvariante der erfindungsgemäßen Steuereinrichtung sieht vor, daß die im Sperrmittel vorgesehene zweite und/oder dritte Bohrung einen ellipsenförmigen Querschnitt aufweist. Hierdurch wird ermöglicht, daß bei einer axialen Verschiebung des Sperrmittels relativ zur Gehäusebohrung eine dosierbare Teilmenge des Fluidstromes dem ersten bzw. zweiten Abflußkanal oder dem Fluidseitenkanal zugeführt werden kann. Desweiteren verhindert der ellipsenförmige Querschnitt der zweiten bzw. dritten Bohrung, daß beim Abführen des Fluidstromes ein spontaner Druckabfall im Fluidstrom auftritt, so daß unerwünschte Störungen, beispielsweise Druckstöße, vermieden werden.

Zusätzlich zu der zuvor beschriebenen ellipsenförmigen Ausgestaltung der zweiten und/oder dritten Bohrung oder anstelle dieser Ausgestaltung besteht die Möglichkeit, daß die zweite und/oder dritte Bohrung und/oder der erste und/oder zweite Abflußkanal und/oder der Fluidseitenkanal einen Bereich aufweist, in dem der Querschnitt der Bohrung, des Fluidseitenkanals bzw. des Abflußkanals verjüngt und/oder verjüngbar ist. Hierdurch wird ebenfalls erreicht, daß die Menge des zur Atmosphäre hin abgeführten Fluidstroms begrenzt bzw. begrenzbar ist, so daß eine derartige Weiterbildung eine Anpassung der erfindungsgemäßen Steuerung an die jeweiligen Verhältnisse ermöglicht.

Abhängig von den jeweiligen Anforderungen und Gegebenheiten kann die erfindungsgemäße Steuereinrichtung einstückig oder mehrstückig ausgebildet sein. Insbesondere dann, wenn eine vorhandene Steuereinrichtung so angepaßt werden soll, daß sie die Vorteile aufweist, wie diese vorstehend für die erfindungsgemäße Steuereinrichtung herausgestellt sind, bietet es sich an, diese dann umzubauende vorhandene Steuereinrichtung zweistückig auszugestalten. Hierbei weist die Steuereinrichtung dann eine Ventileinrichtung auf, die lösbar an der Steuereinrichtung angeordnet ist.

In Weiterbildung der zuvor beschriebenen Ausführungsform weist die erfindungsgemäße Steuereinrichtung einen dreistückigen Aufbau auf, wobei die Ventileinrichtung, ein die Fluidteilkanalabschnitte aufweisendes Verbindungsglied und der Filterkopf, der die Filtereinrichtungen sowie die hierzu gehörenden Kanäle umfaßt, zusammengebaut sind.

Vorteilhafte Weiterbildung der erfindungsgemäßen Steuereinrichtung sind in den Unteransprüchen angegeben.

Die erfindungsgemäße Steuereinrichtung wird nachfolgend anhand von einer Ausführungsform in Verbindung mit der Zeichnung näher erläutert. Es zeigen:
- Figur 1: eine schematische Seitenansicht der Steuereinrichtung in der ersten Stellung des Sperrmittels;
- Figur 2: eine schematische Schnittansicht längs der Linie C-D in Figur 1;
- Figur 3: eine schematische Schnittansicht des Sperrmittels in der ersten Stellung;
- Figur 4: eine schematische Seitenansicht der Steuereinrichtung in der zweiten Stellung des Sperrmittels;
- Figur 5: eine Schnittansicht längs der Linie C-D in Figur 4; und
- Figur 6: eine schematische Schnittansicht des Sperrmittels in der zweiten Stellung.

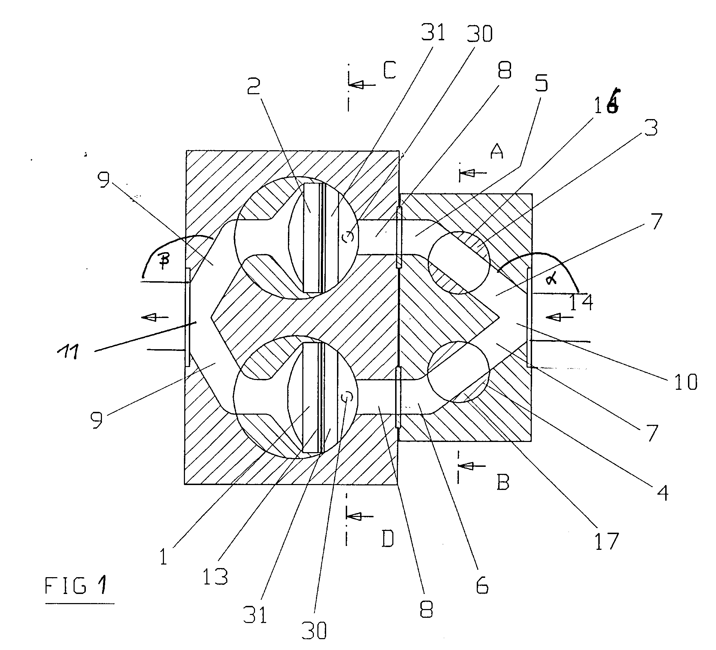

In den Figuren 1 bis 6 sind dieselben Teile mit den selben Bezugszeichen versehen.

Wie in der Figur 1 dargestellt ist, wird ein zu filtrierende Fluidstrom 14 über den Fluidzufuhrkanal 10 den beiden Fluidteilkanälen 5 und 6 zugeführt. Im ersten Kanalabschnitt 7 eines jeden Fluidteilkanales ist jeweils eine Ventileinrichtung 3 bzw. 4 positioniert, wobei in Figur 1 eine Stellung (erste Stellung) der Steuereinrichtung dargestellt ist, wie diese in der Produktion auftritt und die ein Filtrieren der beiden Fluidteilströme ermöglicht. Um dies zu erreichen, ist in jedem zweiten Kanalabschnitt 8 des Fluidteilkanals 5 bzw. des Fluidteilkanals 6 eine Filtereinrichtung 1 bzw. 2 angeordnet, wobei stromab dieser Filtereinrichtung 1 bzw. 2 dann die entsprechenden dritten Kanalabschnitte 9 wieder zum Fluidabfuhrkanal 11 zusammengeführt werden.

Der Fluidzufuhrkanal 10 ist relativ zum ersten Abschnitt 7 des Fluidteilkanals 3 bzw. zum ersten Abschnitt 7 des Fluidteilkanals 4 unter einem Winkel α von etwa 140° angeordnet, während der dritte Kanalabschnitt 9 relativ zum Fluidabfuhrkanal 11 unter einem Winkel β von etwa 130° positioniert ist. Die beiden zweiten Kanalabschnitte 8 der beiden Fluidteilkanäle 5 und 6 verlaufen parallel.

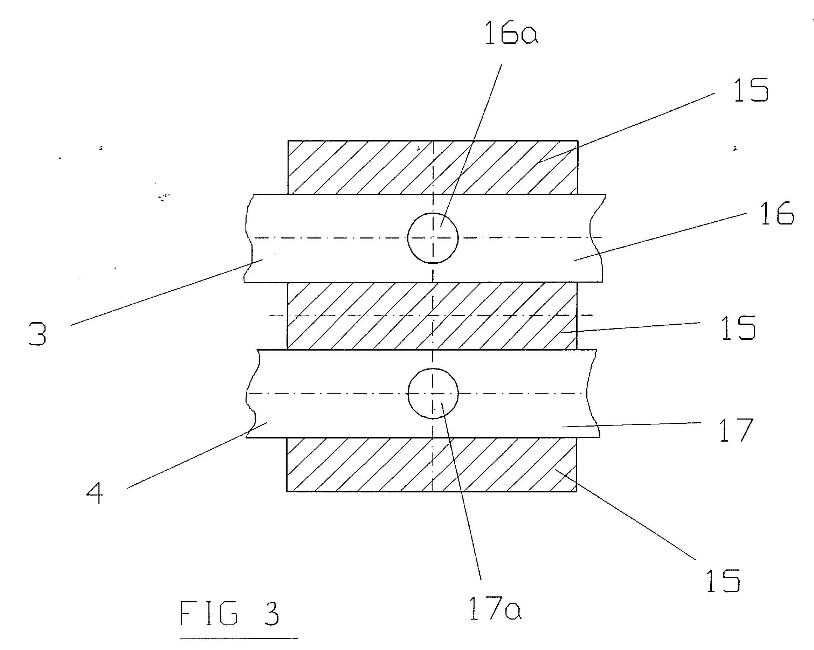

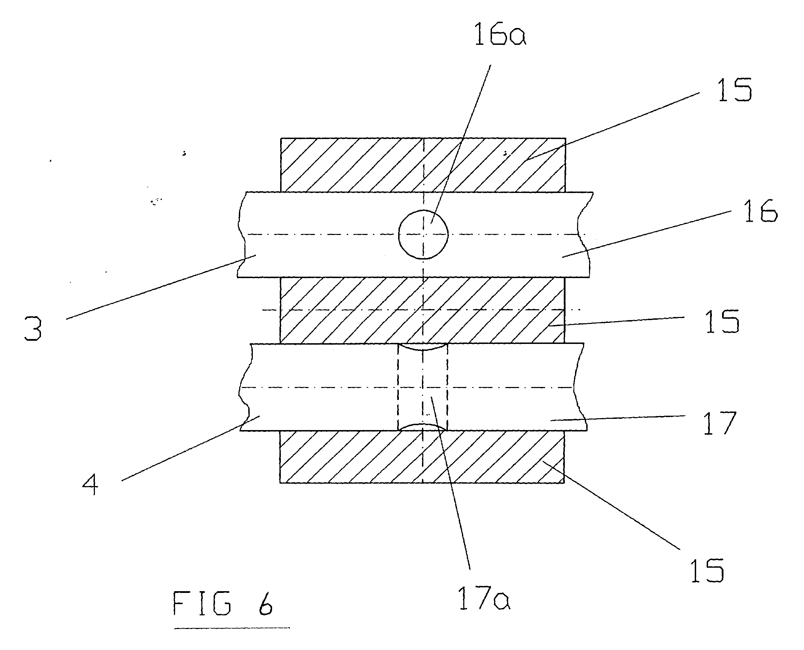

Wie am besten der Figur 3 zu entnehmen ist, weist jede Ventileinrichtung 3 bzw. 4 ein Ventilgehäuse 15 auf, das mit einer zylindrischen Bohrung versehen ist, wobei innerhalb dieser zylindrischen Bohrung ein als Sperrmittel 16 bzw. 17 fluiddicht angeordneter Sperrbolzen vorgesehen ist. Die zylindrischen Sperrbolzen 16 bzw. 17 sind identisch ausgestaltet und drehbar innerhalb der im Ventilgehäuse 15 vorgesehenen Bohrung angeordnet, derart, daß jeder Sperrbolzen 16 bzw. 17 eine Position einnehmen kann, wie diese in Figur 3 dargestellt ist, sowie eine Position einnehmen kann, wie diese für den Sperrbolzen 17 in der Figur 6 gezeigt ist. Aufgrund der identischen Ausgestaltung der Sperrbolzen 16 und 17 wird nachfolgend nur noch der Sperrbolzen 17 im Detail beschrieben.

Der zylindrische Sperrbolzen 17 (Figur 3) ist derart im ersten Kanalabschnitt 7 des Fluidteilkanals 6 angeordnet, daß seine Längsachse im Wesentlichen senkrecht zur Fluidströmungsrichtung im Teilkanal 7 ausgerichtet ist. Auf der axialen Höhe des Fluidteilkanals 7 weist der Sperrbolzen 17 eine sich über den gesamten radialen Durchmesser erstreckende Durchtrittsöffnung 17a auf, die derart mit dem ersten Kanalabschnitt 7 ausgerichtet werden kann, daß hierdurch der Durchtritt des Fluids in dem Fluidteilkanal 6 nicht behindert wird, wie dies in Figur 3 für beide Ventileinrichtungen 3 und 4 gezeigt ist.

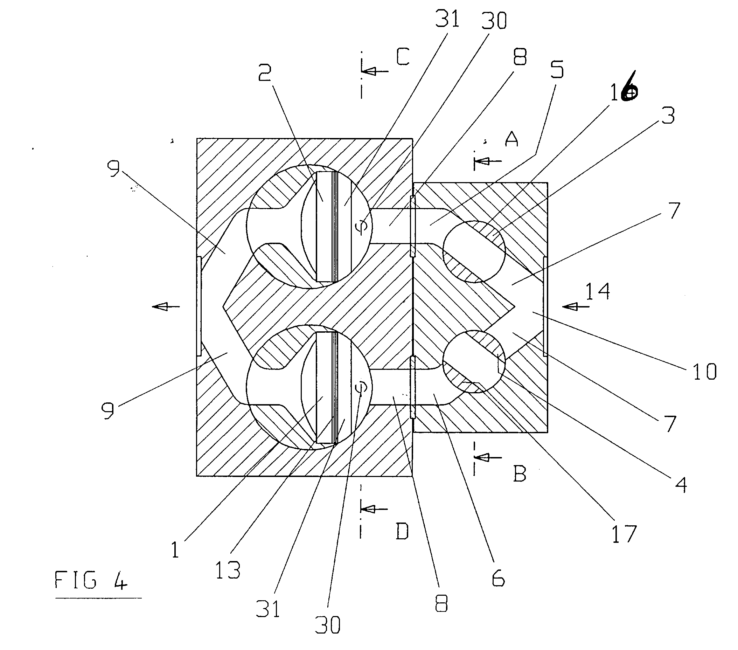

Desweiteren können die Sperrbolzen 16 und 17 eine Position einnehmen, wie diese für den Sperrbolzen 17 der Ventileinrichtung 4 in Figur 4 sowie in Figur 6 gezeigt ist. Hierdurch wird bewirkt, daß in dieser Stellung, die im vorstehenden Text auch als zweite Stellung bezeichnet ist, die Fluidströmung im Fluidteilkanal 6 unterbrochen ist.

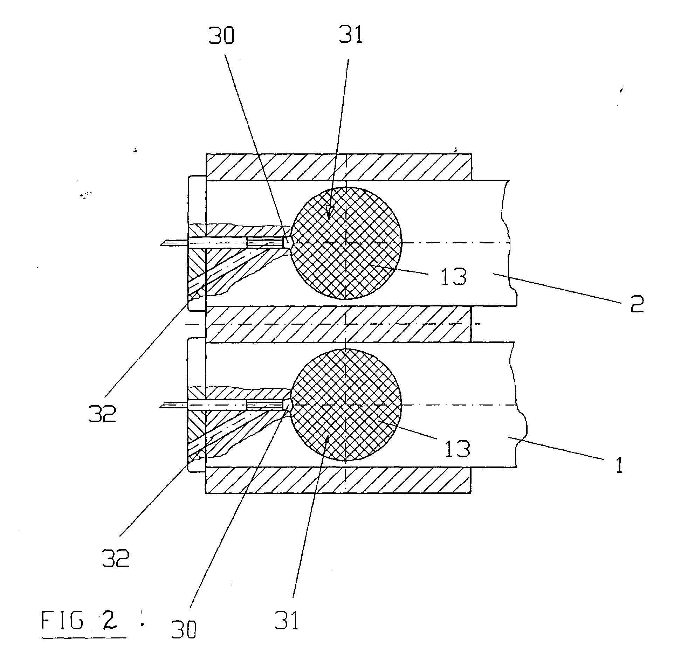

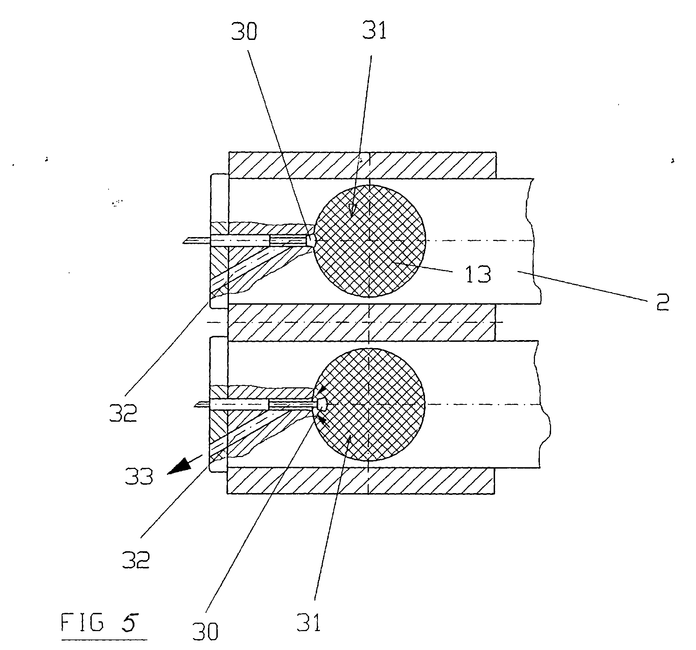

Zusätzlich zu den zuvor beschriebenen Ventileinrichtung 3 und 4 weist die in den Figuren 1 bis 6 gezeigte Steuereinrichtung noch jeweils pro Filtereinrichtung 1 und 2 ein zusätzliches Absperrventil auf, wie dieses in den Figuren 2 und 5 gezeigt ist. Hierbei ist dieses Absperrventil 30 fußseitig in jedem Raum 31 stromauf des ersten Filters 13 der Filtereinrichtung 1 und der Filtereinrichtung 2 angeordnet, wobei das Absperrventil 30 in seiner geschlossenen Stellung verhindert, daß ein Fluidteilstrom zur Atmosphäre hin abfließt. Wird hingegen dieses Absperrventil 30 geöffnet, wie dies in Figur 5 für die untere Filtereinrichtung 1 dargestellt ist, so kann über das dann geöffnete Absperrventil 30 Fluid über einen Ablaßkanal 32 zur Atmosphäre hin abgeführt werden, wie dies in der Figur 5 durch den Pfeil 33 zum Ausdruck gebracht wird.

Die vorstehend im Zusammenhang mit den Figuren 1 bis 6 beschriebene Steuereinrichtung arbeitet wie folgt:
Während der Produktionsstellung, wie diese in den Figuren 1 bis 3 gezeigt ist und die vorstehend als erste Stellung bezeichnet ist, wird das zu filtrierende Fluid, beispielsweise der thermoplastische Kunststoff, über den Fluidzufuhrkanal 10 in Pfeilrichtung 14 durch die Steuereinrichtung transportiert. Nach Passieren der Ventileinrichtungen 3 und 4, deren Sperrbolzen 16 bzw. 17 in der ersten Stellung eingestellt sind, wird der in Pfeilrichtung 14 zugeführte Fluidstrom auf die beiden Fluidteilkanäle 5 und 6 gleichmäßig aufgeteilt und dort durch die beiden Filtereinrichtungen 1 und 2 filtriert. Zu diesem Zeitpunkt sind die Absperrventile 30 (Figur 2) geschlossen. Nach Passieren der Filtereinrichtungen 1 und 2 gelangt das nunmehr filtrierte Fluid über den Fluidabfuhrkanal 11 beispielsweise zur Düse eines Extruders. In dieser Produktionsstellung befinden sich die Sperrbolzen 16 und 17 der Ventileinrichtungen 3 und 4 in ihrer ersten, in der Figur 3 gezeigten Stellung, so daß der Fluidstrom vom Fluidzufuhrkanal 10 zum Fluidabfuhrkanal 11 hierdurch nicht behindert wird.

Wird nunmehr festgestellt, daß ein Filter 13 der Filtereinrichtung 1 oder 2 mit Schmutzpartikeln beladen ist und von daher eine Regenerierung erforderlich wird, wird der Sperrbolzen 17 aus seiner in der Figur 3 gezeigten ersten Stellung in eine Stellung überführt, wie sie vorstehend als zweite Stellung bezeichnet ist und wie sie in der Figur 6 abgebildet ist. In dieser zweiten Stellung, die auch als Rückspülstellung bezeichnet werden kann, wird nach wie vor Fluid in Pfeilrichtung 14 über den Fluidzufuhrkanal 10 zugeführt, wobei das Fluid dann über den Fluidteilkanal 5 in Richtung auf den Fluidabfuhrkanal 11 strömt, derart, daß es die Filtereinrichtung 2 passiert und dort filtriert wird. Der Fluidteilkanal 6 ist zu diesem Zeitpunkt von der Fluidzufuhr durch die Stellung des Sperrbolzens 17 abgesperrt, wie dies in der Figur 6 dargestellt ist. Bedingt dadurch, daß sich durch die nicht gezeigte Düse des Extruders stromab des Fluidabfuhrkanals 11 ein Gegendruck aufbaut, wird nunmehr ein Teilstrom des Fluids vom Fluidabfuhrkanal 11 über den dritten Kanalabschnitt 9, den zweiten Kanalabschnit 8, die Filtereinrichtung 2 in Richtung auf den geschlossenen Sperrbolzen 17 gefördert (Figur 4). Zu diesem Zeitpunkt ist jedoch das in Figur 5 gezeigte Absperrventil der Filtereinrichtung 1 geöffnet, so daß die von der Siebfläche des Filters 13 durch das zurückgeführte Fluid abgespülten Partikel über das geöffnete Absperrventil 30 und dem Abflußkanal 32 aus der Steuereinrichtung abgeführt werden können.

Soll hingegen die Filtereinrichtung 2 rückgespült werden, so erfolgt dies in analoger Weise. Hierzu ist es nur erforderlich, den Sperrbolzen 16 (Figur 1) in eine solche Stellung zu überführen, wie diese in Figur 4 und Figur 6 für den Sperrbolzen 17 angegeben ist, während zu diesem Zeitpunkt der Sperrbolzen 17 den Durchfluß des Fluids durch die Ventileinrichtung 4 nicht behindert. Desweiteren wird dann das Absperrventil 30 der Filtereinrichtung 2 geöffnet, während das entsprechende Absperrventil 30 der Filtereinrichtung 1 geschlossen ist.

Im vorstehenden Text wurde wiederholt eine Düse eines Extruders erwähnt. Hierunter fallen selbstverständlich auch andere Werkzeuge, die üblicherweise bei der Verarbeitung von thermoplastischen Kunststoffen eingesetzt werden.

## Patentansprüche

1. Steuer- und Filtriereinrichtung für mindestens zwei Fluidteilströme mit einem gemeinsamen Fluidzufuhrkanal (10) und einem gemeinsamen Fluidabfuhrkanal (11), wobei der Fluidzufuhrkanal (10) über mindestens zwei Fluidteilkanäle (5, 6) mit dem Fluidabfuhrkanal (11) verbunden ist und jeder Fluidteilkanal (5, 6) eine Filtereinrichtung (1, 2) aufweist und desweiteren jedem Fluidteilkanal (5, 6) oder jeder Filtereinrichtung (1, 2) ein Absperrventil (30) zugeordnet ist, das in seiner Sperrstellung eine Öffnung (32) zur Atmosphäre hin verschließt, wobei die Steuereinrichtung mindestens eine, mit mindestens einem Sperrmittel (16, 17) versehene Ventileinrichtung (3, 4) aufweist und das Sperrmittel (16, 17) der Ventileinrichtung (3, 4) mindestens einem der Kanäle (10, 5, 6, 11) derart zugeordnet ist, daß das Sperrmittel (16, 17) zwischen einer ersten Stellung, in der das in den Kanälen (10; 5, 6; 11) strömende Fluid filtriert wird, und einer zweiten Stellung, in der das Fluid in dem mindestens einen Teilkanal (5; 6) filtriert wird, während gleichzeitig die in dem mindestens anderen Teilkanal (6; 5) angeordnete Filtereinrichtung (1, 2) durch einen Teilstrom des filtrierten Fluids aus dem mindestens einen Teilkanal freigespült wird, durch Drehung und/oder durch Verschieben bewegbar ist.

2. Einrichtung nach Anspruch 1, dadurch gekennzeichnet, daß die Einrichtung eine einzige Ventileinrichtung (3) aufweist.

3. Einrichtung nach Anspruch 2, dadurch gekennzeichnet, daß die einzige Ventileinrichtung (3) ein einziges Sperrmittel (16) aufweist, wobei das Sperrmittel (16) dem Fluidzufuhrkanal (10) im Bereich der Abzweigung der Fluidteilkanäle (5, 6) zugeordnet ist.

4. Einrichtung nach Anspruch 1 oder 2, dadurch gekennzeichnet, daß die einzige Ventileinrichtung ein einziges Sperrmittel aufweist, wobei das einzige Sperrmittel allen Fluidteilkanälen (5, 6) zugeordnet ist.

5. Einrichtung nach Anspruch 1, dadurch gekennzeichnet, daß die Einrichtung eine der Anzahl der Fluidteilkanäle (5, 6) entsprechende Anzahl von Ventileinrichtungen (3, 4) aufweist, wobei jede Ventileinrichtung (3, 4) jeweils mit einem Sperrmittel (16; 17), das im Fluidstrom dieses Fluidteilkanales (3; 4) angeordnet ist, versehen ist.

6. Einrichtung nach Anspruch 5, dadurch gekennzeichnet, daß die Einrichtung zwei Fluidteilkanäle (5, 6) und zwei, den Fluidteilkanälen zugeordnete Ventileinrichtungen (3, 4) aufweist, wobei jedes Sperrmittel (16, 17) einer jeden Ventileinrichtung (3, 4) durch Drehung und/oder Verschieben aus der ersten Stellung in die zweite Stellung und umgekehrt bringbar ist.

7. Einrichtung nach einem der Ansprüche 1 bis 3, 5 oder 6, dadurch gekennzeichnet, daß das Sperrmittel einer jeden Ventileinrichtung als zylindrischer Bolzen (16, 17) ausgebildet ist, wobei der zylindrische Bolzen (16, 17) im Wesentlichen senkrecht zu der Strömungsrichtung des Fluids im Fluidzufuhrkanal (10) bzw. in den Fluidteilkanälen (5, 6) ausgerichtet ist, daß der Bolzen (16, 17) mit einer Durchtrittsöffnung (16a, 17a) versehen ist, die auf den Fluidzufuhrkanal (10) oder die Fluidteilkanäle (5, 6) ausrichtbar ist, und daß durch Drehung des Bolzens (16) wahlweise die erste Stellung oder die zweite Stellung einstellbar ist.

8. Einrichtung nach Anspruch 7, dadurch gekennzeichnet, daß jedem Fluidteilkanal ein als zylindrischer Bolzen (16, 17) ausgebildetes Sperrmittel zugeordnet ist.

9. Einrichtung nach einem der Ansprüche 1 bis 6, dadurch gekennzeichnet, daß das Sperrmittel einer jeden Ventileinrichtung (3, 4) als scheibenförmiges Sperrmittel ausgebildet ist, wobei die Stirnflächen des scheibenförmigen Sperrmittels im wesentlichen senkrecht zur Strömungsrichtung des Fluids im Fluidzufuhrkanal (10) oder in den Fluidteilkanälen (5, 6) ausgerichtet sind, daß das scheibenförmige Sperrmittel mit mindestens einer ersten Durchtrittsöffnung versehen ist, die auf den Fluidzufuhrkanal (10) bzw. die Fluidteilkanäle (5, 6) ausrichtbar ist, und daß durch Drehung des scheibenförmigen Sperrmittels wahlweise die erste Stellung oder die zweite Stellung einstellbar ist.

10. Einrichtung nach Anspruch 9, dadurch gekennzeichnet, daß das scheibenförmige Sperrmittel als teilscheibenförmiges Sperrmittel ausgebildet ist.

11. Einrichtung nach einem der vorangehenden Ansprüche, dadurch gekennzeichnet, daß die Filtereinrichtung (1, 2) mindestens ein in einem Bolzen angeordnetes Filter (13) umfaßt.

12. Einrichtung nach einem der vorangehenden Ansprüche, dadurch gekennzeichnet, daß das Absperrventil (30) dem Raum (31) stromauf des Filters (13) zugeordnet ist.

13. Einrichtung nach Anspruch 12, dadurch gekennzeichnet, daß das Absperrventil (30) an der Einmündung eines den Raum (31) mit der Atmosphäre hin verbindenden Abflußkanals (32) angeordnet ist.

14. Einrichtung nach einem der vorangehenden Ansprüche, dadurch gekennzeichnet, daß das Absperrventil stromab des Filters angeordnet ist und daß das Filter im Fluidstrom angeordnet und derart gelagert ist, daß die durch das Filtrieren des Fluids mit Partikeln beladene Filterfläche durch eine Veränderung der Position des Filters durch das Fluid freispülbar ist, wobei das nach dem Freispülen der Filterfläche mit Partikeln beladene Fluid über das Absperrventil zur Atmosphäre hin abführbar ist.

15. Einrichtung nach Anspruch 14, dadurch gekennzeichnet, daß das Filter in einem Bolzen drehbar angeordnet ist.

16. Einrichtung nach Anspruch 14 oder 15, dadurch gekennzeichnet, daß das Absperrventil derart dem Filter zugeordnet ist, daß es den stromab des Filters angeordneten Abschnitt des jeweiligen Fluidteilkanals absperrt.

17. Einrichtung nach einem der vorangehenden Ansprüche, dadurch gekennzeichnet, daß die Einrichtung geeignete Halterungselemente zur Anbringung der Einrichtung in einer Position stromab der Förderschnecke eines Kunststoffextruders oder der Schmelzepumpe und stromauf des Werkzeuges, insbesondere der Düse, aufweist.

18. Einrichtung nach einem der vorangehenden Ansprüche, dadurch gekennzeichnet, daß die Einrichtung zwei Fluidteilkanäle (5, 6) aufweist, daß jeder der beiden Fluidteilkanäle (5, 6) einen ersten, stromab vom Fluidzufuhrkanal (10) angeordneten Kanalabschnitt (7) aufweist, wobei der erste Kanalabschnitt (7) unter einem Winkel α von 120° bis 160° relativ zum Fluidzufuhrkanal (10) angeordnet ist, daß sich hieran in Fluidströmungsrichtung gesehen jeweils ein zweiter Kanalabschnitt (8) anschließt, wobei die beiden zweiten Kanalabschnitte (8) im wesentlichen parallel verlaufen, und daß in Fluidströmungsrichtung gesehen jeweils ein dritter Kanalabschnitt (9) folgt, der unter einem Winkel β von 120° bis 140° vom zweiten Kanalabschnitt (8) relativ zum gemeinsamen Fluidabfuhrkanal (11) hin geneigt angeordnet ist.

19. Einrichtung nach Anspruch 18, dadurch gekennzeichnet, daß in jedem ersten Kanalabschnitt (7) eine Ventileinrichtung (3, 4) vorgesehen ist.

20. Einrichtung nach Anspruch 18 oder 19, dadurch gekennzeichnet, daß in jedem zweiten Kanalabschnitt (8) jeweils eine Filtereinrichtung (1, 2) positioniert ist.

21. Einrichtung nach einem der vorangehenden Ansprüche, dadurch gekennzeichnet, daß das Sperrmittel (16, 17) durch Verschieben aus der ersten Stellung in die zweite Stellung und umgekehrt hierzu überführbar ist.

22. Einrichtung nach Anspruch 21, dadurch gekennzeichnet, daß die Einrichtung zwei Fluidteilkanäle (5, 6) sowie zwei Ventileinrichtungen (3, 4) aufweist, wobei jedem Fluidteilkanal (5, 6) ein Sperrmittel (16, 17) zugeordnet ist.

23. Einrichtung nach Anspruch 21 oder 22, dadurch gekennzeichnet, daß jede Ventileinrichtung (3, 4) eine zylindrische Gehäusebohrung (15) und ein zylindrisches Sperrmittel (16, 17) aufweist, daß das zylindrische Sperrmittel (16, 17) axial verschiebbar in der zylindrischen Gehäusebohrung (15) gelagert ist, daß die zylindrische Gehäusebohrung (15) mit radial gegenüberliegenden zum Anschluß an entsprechende Teilkanalabschnitte (7, 8) geeignete Bohrungen versehen ist und daß das Sperrmittel (16, 17) mit einer radial über den gesamten Durchmesser verlaufenden ersten Durchgangsbohrung sowie mit axialen Abstand hiervon mit einer zweiten, radial nur über einen Teildurchmesser verlaufenden Bohrung versehen ist, wobei die zweite Bohrung in einen sich axial durch das Sperrmittel (16, 17) erstreckenden Abflußkanal mündet, der zur Atmosphäre hin offen ist.

24. Einrichtung nach Anspruch 23, dadurch gekennzeichnet, daß das Sperrmittel (16, 17) eine dritte, radial nur über einen Teildurchmesser verlaufende Bohrung aufweist, wobei die dritte Bohrung in einen sich axial durch das Sperrmittel erstreckenden zweiten Abflußkanal mündet, der zur Atmosphäre hin offen ist.

25. Einrichtung nach Anspruch 23 oder 24, dadurch gekennzeichnet, daß die zweite und/oder dritte Bohrung einen ellipsenförmigen Querschnitt aufweist.

26. Einrichtung nach Anspruch 23 bis 25, dadurch gekennzeichnet, daß die zweite und/oder dritte Bohrung und/oder der erste und/oder zweite Abflußkanal einen Bereich aufweist, in dem der Querschnitt der Bohrung bzw. des Abflußkanales verjüngt ist.

27. Einrichtung nach einem der vorangehenden Ansprüche, dadurch gekennzeichnet, daß die Ventileinrichtung (3, 4) lösbar an der Einrichtung angeordnet ist.

28. Einrichtung nach Anspruch 27, dadurch gekennzeichnet, daß die Einrichtung aus der Ventileinrichtung (3, 4) einem die Fluidteilkanalabschnitte aufweisenden Verbindungsglied und dem Filterkopf, der die Filtereinrichtungen (1, 2) enthält, zusammengebaut ist.

## Claims

1. A control and filtering device for at least two partial fluid streams comprises a common fluid supply duct (10) and a common fluid removal duct (11), whereby said fluid supply duct (10) is connected with said fluid removal duct (11) by at least two partial fluid ducts (5, 6) and each partial fluid duct (5, 6) contains a filtering device (1, 2) and furthermore a stop valve (30) being allocated to each partial fluid duct (5, 6) or to each filtering device (1, 2), wherein in the blocking position of said stop valve (30) an opening (32) to the atmosphere is closed, whereby the control device further comprises at least one valve device (3, 4) containing at least one blocking element (16, 17), said blocking element (16, 17) of said valve device (3, 4) being allocated to at least one of the ducts (10; 5, 6; 11) in such a manner, that said blocking element (16, 17) can be moved between a first position, in which the fluid flowing in said ducts (10; 5, 6; 11) is filtered, and a second position, in which the fluid is filtered in at least one partial duct (5, 6), whereas at the same time said filtering device (1, 2) provided in the at least one other partial duct (6, 5) is washed by a partial fluid stream of filtered fluid from the at least one partial fluid duct and wherein said blocking element (16, 17) can be moved from the first position in the second position and in the reverse direction by a rotating and/or shifting movement.

2. The device according to claim 1, characterized in that the device comprises a single valve device (3).

3. The device according to claim 2, characterized in that the single valve device (3) comprises a single blocking element (16), said blocking element (16) being allocated to the fluid supply duct (10) in the zone of the branching of the partial fluid ducts (5, 6).

4. The device according to claim 1 or 2, characterized in that the single valve device comprises a single blocking element, wherein said single blocking element is allocated to all partial fluid ducts (5, 6).

5. The device according to claim 1, characterized in that the device comprises a number of valve devices (3, 4) corresponding to the number of partial fluid ducts (5, 6), wherein each valve device (3, 4) comprises a blocking element (16, 17), which is arranged in the fluid stream of this partial fluid duct (3, 4).

6. The device according to claim 5, characterized in that the device comprises two partial fluid ducts (5, 6) and two valve devices (3, 4) allocated to said partial fluid ducts, and said blocking element (16, 17) of each valve device (3, 4) can be moved from the first position in the second position and in the reverse direction by a rotating and/or shifting movement.

7. The device according to one of the claims 1 to 3, 5 or 6, characterized in that the blocking element of each valve device has the shape of a cylindrical piston (16, 17), said cylindrical piston (16, 17) being positioned mainly perpendicularly to the flow direction of the fluid in the fluid supply duct (10) or the partial fluid ducts (5, 6), wherein the piston (16, 17) comprises a hole (16a, 17a), which can be brought in alignment with the fluid supply duct (10) or the partial fluid ducts (5, 6), and wherein the first position or the second position can be selected by rotating the piston (16).

8. The device according to claim 7, characterized in that each partial fluid duct comprises a blocking element having the shape of a cylindrical piston (16, 17).

9. The device according to one of the claims 1 to 6, characterized in that the blocking element of each valve device (3, 4) is shaped as a disc-shaped blocking element, the front surfaces of said disc-shaped blocking element being mainly perpendicular to the direction of the flow of the fluid in the fluid supply duct or in the partial fluid ducts (5, 6), wherein the disc-shaped blocking element comprises at least one first hole, which can be brought in alignment with the fluid supply duct (10) or the partial fluid ducts (5, 6), and wherein the first position or the second position can be selected by the rotating movement of said disc-shaped blocking element.

10. The device according to claim 9, characterized in that said disc-shaped blocking element is only partly shaped as a disc-shaped blocking element.

11. The device according to one of the preceding claims, characterized in that the filtering device (1, 2) comprises at least one filter (13) arranged in a piston.

12. The device according to one of the preceding claims, characterized in that the stop valve (30) is arranged in the zone (31) upstream from the filter (13).

13. The device according to claim 12, characterized in that the stop valve (30) is arranged at the inlet opening of a draining duct (32) which connects the zone (31) with the atmosphere.

14. The device according to one of the preceding claims, characterized in that the stop valve is arranged downstream from the filter and the filter is arranged in the fluid stream and having such a bearing, that the filter surface, covered with particles by the filtration of the fluid, can be washed by the fluid by a change in the position of the filter, said fluid containing the particles being led to the atmosphere through the stop valve after the washing of the filter surface.

15. The device according to claim 14, characterized in that the filter is arranged in a piston in a rotable manner.

16. The device according to claim 14 or 15, characterized in that the stop valve is allocated to the filter in such a way, that it blocks the duct section of the respective partial fluid duct downstream from the filter.

17. The device according to one of the preceding claims, characterized in that the device comprises suitable mounting elements to attach the device in a position downstream from the feed screw of an extruder for synthetic material or the pump for melted masses and upstream from the tool in particular of the die.

18. The device according to one of the preceding claims, characterized in that the device comprises two partial fluid ducts (5, 6) and each of the two partial fluid ducts (5, 6) contains a first duct section (7) downstream from the fluid supply duct (10), said first duct section (7) forming an angle α of 120 ° to 160 ° with the fluid supply duct (10), wherein said first duct section is followed by a second duct section (8), whereby the two second duct sections (8) are mainly parallel, and wherein said second duct section (8) is followed in the fluid flow direction by a third duct section (9) between said second duct section and the fluid removal duct (11), said third duct forming an angle β of 120 ° to 140 ° with the fluid removal duct (11).

19. The device according to claim 18, characterized in that each first duct section (7) comprises a valve device (3, 4).

20. The device according to claims 18 or 19, characterized in that a filtering device (1, 2) is positioned in each second duct section (8).

21. The device according to one of the preceding claims, characterized in that the blocking element (16, 17) can be shifted from the first position in the second position and in the reverse direction.

22. The device according to claim 21, characterized in that the device comprises two partial fluid ducts (5, 6) and two valve devices (3, 4), whereby a blocking element (16, 17) is allocated to each of said partial fluid ducts (5, 6).

23. The device according to claim 21 or 22, characterized in that each valve device (3, 4) comprises a cylindrical drill hole in the housing (15) and a cylindrical blocking element (16, 17), wherein said cylindrical blocking element (16, 17) is arranged with such a bearing, that it is axially movable in said cylindrical drill hole of the housing (15), wherein the cylindrical hole in the housing (15) is provided with two radially opposite drill holes with access to corresponding partial duct sections (7, 8) and wherein the blocking element (16, 17) comprises a first drill hole radially running through its whole diameter and a second hole, arranged at axial distance from the first drill hole, extending only over part of the diameter, whereby said second hole joins a draining duct extending axially through the blocking element (16, 17) and being open to the atmosphere.

24. The device according to claim 23, characterized in that the blocking element (16, 17) comprises a third drill hole, radially extending only over part of the diameter, said third drill hole ending in a second draining duct axially extending through the blocking element and being open to the atmosphere.

25. The device according to claim 23 or 24, characterized in that the second and/or third drill hole comprises an elliptical cross-section.

26. The device according to claim 23 to 25, characterized in that the second and/or third drill hole and/or the first and/or second draining duct comprises a zone, in which the diameter of the drilling hole or the draining duct tapers.

27. The device according to one of the preceding claims, characterized in that the valve device (3,4) is arranged to the device in such a way, that it can be disconnected.

28. The control device according to claim 27, characterized in that the device consists of the valve device (3, 4), a connecting section and the filtering head, whereby said connecting section comprises the partial fluid duct sections and said filtering head comprises the filtering devices (1, 2).

## Revendications

1. Dispositif de commande et de filtration pour au moins deux écoulements partiels de fluide, lequel dispositif présente un canal (10) commun d'amenée de fluide et un canal (11) commun d'évacuation de fluide, le canal (10) d'amenée de fluide étant relié par au moins deux canaux (5, 6) partiels de fluide au canal (11) d'évacuation de fluide, et chaque canal (5, 6) partiel de fluide présente un dispositif de filtration (1, 2) et en outre à chaque canal (5, 6) partiel de fluide ou à chaque dispositif de filtration (1, 2) est associée une vanne de blocage (30) qui, dans sa position de blocage, ferme une ouverture (32) par rapport à l'atmosphère, et le dispositif de commande présente au moins un dispositif de vanne (3, 4) doté d'au moins un moyen de blocage (16, 17), et le moyen de blocage (16, 17) du dispositif de vanne (3, 4) est associé à au moins l'un des canaux (10, 5, 6, 11) de telle sorte que le moyen de blocage (16, 17) peut être déplacé par rotation et/ou par coulissement entre une première position dans laquelle le fluide s'écoulant dans les canaux (10; 5, 6; 11) est filtré, et une deuxième position dans laquelle le fluide s'écoulant dans le canal partiel (5; 6) au moins présent est filtré, tandis qu'en même temps le dispositif de filtration (1, 2) disposé dans l'autre canal partiel (6; 5) au moins présent est rincé par un écoulement partiel du fluide filtré provenant du canal partiel au moins présent.

2. Dispositif selon la revendication 1, caractérisé en ce que le dispositif présente un seul dispositif de vanne (3).

3. Dispositif selon la revendication 2, caractérisé en ce que l'unique dispositif de vanne (3) présente un unique moyen de blocage (16), le moyen de blocage (16) étant associé au canal (10) d'amenée de fluide dans la région de la dérivation des canaux (5, 6) partiels de fluide.

4. Dispositif selon la revendication 1 ou 2, caractérisé en ce que l'unique dispositif de vanne présente un unique moyen de blocage, l'unique moyen de blocage étant associé à tous les canaux (5, 6) partiels de fluide.

5. Dispositif selon la revendication 1, caractérisé en ce que le dispositif présente un nombre de dispositifs de vanne (3, 4) qui correspond au nombre des canaux (5, 6) partiels de fluide, chaque dispositif de vanne (3, 4) étant doté d'un moyen de blocage (16; 17) qui est disposé dans l'écoulement de fluide de ce canal (3; 4) partiel de fluide.

6. Dispositif selon la revendication 5, caractérisé en ce que le dispositif présente deux canaux (5, 6) parties de fluide et deux dispositifs de vanne (3, 4) associés aux canaux parties de fluide, chaque moyen de blocage (16, 17) de chaque dispositif de vanne (3, 4) pouvant être amené par rotation et/ou par coulissement de la première position jusque dans la deuxième position et inversement.

7. Dispositif selon l'une des revendications 1 à 3, 5 ou 6, caractérisé en ce que le moyen de blocage de chaque dispositif de vanne est configuré comme boulon (16, 17) cylindrique, le boulon (16, 17) cylindrique étant orienté essentiellement à la perpendiculaire de la direction d'écoulement du fluide dans le canal (10) d'amenée de fluide ou dans les canaux (5, 6) partiels de fluide, en ce que le boulon (16, 17) est doté d'une ouverture de passage (16a, 17a) qui peut être alignée sur le canal (10) d'amenée de fluide ou sur les canaux (5, 6) parties de fluide, et en ce qu'une rotation du bouton (16) permet d'établir au choix la première position ou la deuxième position.

8. Dispositif selon la revendication 7, caractérisé en ce qu'à chaque canal partiel de fluide est associé un moyen de blocage configuré comme bouton (16, 17) cylindrique.

9. Dispositif selon l'une des revendications 1 à 6, caractérisé en ce que le moyen de blocage de chaque dispositif de vanne (3, 4) est configuré comme moyen de blocage en forme de disque, les surfaces frontales du moyen de blocage en forme de disque étant orientées essentiellement à la perpendiculaire de la direction d'écoulement du fluide dans le canal (10) d'amenée de fluide ou dans les canaux (5, 6) partiels de fluide, en ce que le moyen de blocage en forme de disque est doté d'au moins une première ouverture de passage qui peut être dirigée vers le canal (10) d'amenée de fluide ou vers les canaux (5, 6) partiels de fluide, et en ce que la première position ou la deuxième position peut être établie par rotation du moyen de blocage en forme de disque.

10. Dispositif selon la revendication 9, caractérisé en ce que le moyen de blocage en forme de disque est configuré comme moyen de blocage en forme de partie de disque.

11. Dispositif selon l'une des revendications précédentes, caractérisé en ce que le dispositif de filtration (1, 2) comporte au moins un filtre (13) disposé dans un boulon.

12. Dispositif selon l'une des revendications précédentes, caractérisé en ce que la vanne de blocage (30) est associée à l'espace (31) situé en amont du filtre (13).

13. Dispositif selon la revendication 12, caractérisé en ce que la vanne de blocage (30) est disposée à l'embouchure d'un canal d'évacuation (32) reliant l'espace (31) à l'atmosphère.

14. Dispositif selon l'une des revendications précédentes, caractérisé en ce que la vanne de blocage est disposée en aval du filtre, et en ce que le filtre est disposé dans l'écoulement du fluide et est monté de telle sorte que la surface de filtration chargée en particules par la filtration du fluide peut être rincée par le fluide en modifiant la position du filtre, et le fluide chargé en particules après le rinçage de la surface du filtre peut être évacué vers l'atmosphère par l'intermédiaire de la vanne de blocage.

15. Dispositif selon la revendication 14, caractérisé en ce que le filtre est disposé dans un boulon de manière à pouvoir tourner.

16. Dispositif selon la revendication 14 ou 15, caractérisé en ce que la vanne de blocage est associée au filtre de telle sorte qu'elle bloque la partie du canal partiel de fluide correspondante, disposée en aval du filtre.

17. Dispositif selon l'une des revendications précédentes, caractérisé en ce que le dispositif présente des éléments appropriés du support permettant d'amener le dispositif dans une position située en aval de la vis de refoulement d'une extrudeuse de matière plastique ou de la pompe de matière fondue et en amont de l'outil, en particulier de la filière.

18. Dispositif selon l'une des revendications précédentes, caractérisé en ce que le dispositif présente deux canaux (5, 6) partiels de fluide, en ce que chacun des deux canaux (5, 6) partiels de fluide présentent une première partie de canal (7) disposée en amont du canal (10) d'amenée de fluide, et la première partie de canal (7) est disposée à un angle α de 120° à 160° par rapport au canal (10) d'amenée de fluide, en ce que, vu dans la direction d'écoulement du fluide, à chaque canal partiel de fluide se raccorde une deuxième partie du canal (8) respective, les deux deuxièmes parties de canal (8) s'étendant essentiellement en parallèle, et en ce que, vu dans la direction d'écoulement du fluide, chaque canal partiel est suivi d'une troisième partie de canal (9) respective qui, partant de la deuxième partie de canal (8), est inclinée d'un angle β de 120° à 140° par rapport au canal (11) commun d'évacuation de fluide.

19. Dispositif selon la revendication 18, caractérisé en ce que dans chaque première partie de canal (7) est prévu un dispositif de vanne (3, 4).

20. Dispositif selon la revendication 18 ou 19, caractérisé en ce que dans chaque deuxième partie de canal (8) est positionné un dispositif de filtre (1, 2).

21. Dispositif selon l'une des revendications précédentes, caractérisé en ce que le moyen de blocage (16, 17) peut être transféré par coulissement de la première position dans la deuxième position et inversement.

22. Dispositif selon la revendication 21, caractérisé en ce que le dispositif présente deux canaux (5, 6) parties de fluide ainsi que deux dispositifs de vanne (3, 4), et à chaque canal (5, 6) partiel de fluide est associé un moyen de blocage (16, 17).

23. Dispositif selon la revendication 21 ou 22, caractérisé en ce que chaque dispositif de vanne (3, 4) présente un alésage cylindrique de boîtier (15) et un moyen cylindrique de blocage (16, 17), en ce que le moyen cylindrique de blocage (16, 17) est monté à coulissement axial dans l'alésage cylindrique de boîtier (15), en ce que l'alésage cylindrique de boîtier (15) est doté d'alésages radialement opposés convenant pour le raccordement à des parties correspondantes (7, 8) de canal partiel, et en ce que le moyen de blocage (16, 17) est traversé par un premier alésage s'étendant radialement sur tout le diamètre, et est doté d'un deuxième alésage, disposé à distance du premier, et qui ne s'étend radialement que sur une partie du diamètre, et le deuxième alésage débouche dans un canal d'évacuation qui s'étend axialement à travers le moyen de blocage (16, 17) et ouvert sur l'atmosphère.

24. Dispositif selon la revendication 23, caractérisé en ce que le moyen de blocage (16, 17) présente un troisième alésage qui s'étend radialement sur seule une partie du diamètre, et le troisième alésage débouche dans un deuxième canal d'évacuation qui s'étend axialement à travers le moyen de blocage et est ouvert sur l'atmosphère.

25. Dispositif selon la revendication 23 ou 24, caractérisé en ce que le deuxième et/ou le troisième alésage présente une section transversale de forme elliptique.

26. Dispositif selon les revendications 23 à 25, caractérisé en ce que le deuxième et/ou le troisième alésage et/ou le premier et/ou le deuxième canal d'évacuation présente une zone dans laquelle la section transversale de l'alésage ou du canal d'évacuation est rétrécie.

27. Dispositif selon l'une des revendications précédentes, caractérisé en ce que le dispositif de vanne (3, 4) est disposé sur le dispositif de commande de manière libérable.

28. Dispositif selon la revendication 27, caractérisé en ce que le dispositif forme un ensemble constitué du dispositif de vanne (3, 4), d'un organe de liaison présentant la partie de canal partiel de fluide et de la tête de filtre qui contient les dispositifs de filtration (1, 2).
